Europäisches Patentamt

European Patent Office

Office européen des brevets

(19)

(11) Veröffentlichungsnummer: **0 165 424**
. **B1**

(12) **EUROPÄISCHE PATENTSCHRIFT**

(45) Veröffentlichungstag der Patentschrift: **02.05.90**

(21) Anmeldenummer: **85105533.5**

(22) Anmeldetag: **07.05.85**

(51) Int. Cl.⁵: **C 01 B 13/11**

(54) **Vorrichtung zur Erzeugung von Ozon.**

(30) Priorität: **22.06.84 DE 3422989**

(43) Veröffentlichungstag der Anmeldung:
**27.12.85 Patentblatt 85/52**

(45) Bekanntmachung des Hinweises auf die
Patenterteilung:
**02.05.90 Patentblatt 90/18**

(84) Benannte Vertragsstaaten:
**AT BE CH FR GB IT LI NL SE**

(56) Entgegenhaltungen:
**EP-A-0 018 318**
**DE-A-2 844 711**
**DE-U-7 615 881**
**DE-U-8 226 003**
**US-A-3 565 776**
**US-A-3 942 020**

**PATENT ABSTRACTS OF JAPAN, Band 3, Nr. 91**
**(C-54)49r, 3. August 1979; & JP - A - 54 67590**
**(TOKYO SHIBAURA DENKI K.K.) 31.05.1979**

(73) Patentinhaber: **MESSER GRIESHEIM GMBH**
**Hanauer Landstrasse 330**
**D-6000 Frankfurt/Main (DE)**

(72) Erfinder: **Leitzke, Ortwin, Dr.**
**Raitz von Frenz Strasse 5**
**D-4044 Kaarst 2 (DE)**
Erfinder: **Wolf, Ewald**
**Martin Luther Strasse 3**
**D-6367 Karben 1 (DE)**

Courier Press, Leamington Spa, England.

EP 0 165 424 B1

## Beschreibung

Die Erfindung betrifft eine Vorrichtung zur Herstellung von Ozon aus Sauerstoff oder Sauerstoff enthaltendem Gas nach den Merkmalen des Anspruches 1.

Ozon ist ein sehr starkes Oxidationsmittel für organische Substanzen und für anorganische Verbindungen, die Elemente mit mehreren Oxidationsstufen enthalten Neben vielfältigen Anwendungen in der Chemie wird es seit Jahrzehnten bei der Wasseraufbereitung eingesetzt. Die hohen Investitions- und Betriebskosten für die Ozonerzeugung schränken jedoch die Anwendungsmöglichkeiten ein.

Obwohl es theoretisch viele Möglichkeiten gibt, Ozon zu erzeugen, hat bis heute praktisch nur die Ozonerzeugung durch stille elektrische Entladung Bedeutung erlangt. Dies gilt sowohl für große stationäre aus auch für kleine transportable Ozonerzeugungsanlagen. Ozonerzeuger, die nach diesem Prinzip arbeiten, bestehen im wesentlichen aus zwei Elektroden, die durch ein Dielektrikum und einen Gasraum voneinander getrennt sind. An die Elektroden wird hochgespannter Wechselstrom angelegt. Gleichzeitig läßt man durch den Gasraum Sauerstoff oder sauerstoffhaltiges Gas strömen. Hierbei erfolgt zwischen den Elektroden eine elektrische Hochspannungsentladung ohne Funkenbildung und helle Lichterscheinung. Diese Hochspannungsentladung führt zur Ozonbildung. Es sind zwei Ozonerzeugertypen dieses Prinzips bekannt, nämlich Plattenozonzeuger, bei denen die Elektroden aus parallelen Platten bestehen, und Rohrozonerzeuger, bei denen die Elektroden aus konzentrischen Rohren bestehen. Die Erfindung betrifft den letztgenannten Ozonerzeugertyp.

Es sind zahlreiche Konstruktionen von Rohrozonerzeugern bekannt, typische Konstruktionen zeigen beispielsweise die DE—PS 1767 109 und DE—OS 3 221 895. Viele Anstrengungen wurden darauf gerichtet, die Leistung der Ozonerzeuger zu verbessern, insbesondere durch eine Erhöhung der Intensität der Feldstärke. Hierzu hat man beispielsweise die Oberfläche der Elektroden durch eine Beschichtung aufgerauht, wie es die DE—PS 1 240 831 zeigt, oder das Dielektrikum mit elektrisch leitenden Inseln versehen, wie es die EU—PS 0 019 307 zeigt. Aus der DE—A 28 44 711 ist ein Rohrozonerzeuger mit drahtförmiger Innenelektrode bekannt, bei der zur Vergrößerung der Entladungsfläche und der Feldstärke auf dem Draht zahlreiche spitze Erhebungen angeordnet sind.

Es sind auch Sonderkonstruktionen bekannt geworden. Beispielsweise zeigt die EU—PS 0 018 318 eine aus Draht bestehende Innenelektrode, die auf einem Zylindermantel aufgewickelt ist, während die Außenelektrode in üblicher Weise als Rohr ausgebildet ist. Die DE—PS 156 531 zeigt dagegen eine spiralförmig gewickelte Außenelektrode und ein Innenelektrode, die als Rohr oder Stab ausgebildet ist.

Spiralförmige Elektroden erfordern aus konstruktiven Gründen verhältnismäßig große Entladungsräume und führen dadurch zu niedrigen und ungleichmäßigen Entladungsdichten sowie niedrigen Ozonkonzentrationen. Bei spiralförmigen Außenelektroden kann außerdem nicht mit Flüssigkeit gekühlt werden, wenn der Zwischenraum zwischen Außenelektrode und Dielektrikum als Entladungsraum genutzt werden soll.

Bei den heute gebräuchlichen Ozonerzeugern werden überwiegend Hochspannungsentladungselektroden verwendet. Diese besitzen entweder ein metallisiertes Dielektrikum aus z.B. Glas, Keramik oder Kunststoff, oder Metallplatten und Metallrohre, die mit dem Dielektrikum beschichtet sind. Die Hochspannung wird hierbei an die Metallschicht angelegt. Dieser Hochspannungsentladungselektrode steht gewöhnlich eine direkt oder indirekt gekühlte Elektrode gegenüber, die in bestimmten Fällen ebenfalls eine dielektrische Schicht tragen kann. Über das Kühlmittel soll die bei der Gasentladung entstehende Wärme abgeführt werden. Durch eine gute Kühlung kann die Ausbeute an Ozon gesteigert werden. Aus diesem Grund wird in vielen Fällen versucht, durch einen zweiten, aufwendigen Kühlkreislauf die Hochspannungsinnenelektrode zu kühlen.

Bei den vorherrschenden Konstruktionen kann die durch die stille elektrische Entladung entstehende Wärme nur durch Diffusion und Konvektion an die gekühlte äußere Elektrode abgeführt werden. Wegen der relativ geringen Feldstärke können bei der Ozonerzeugung die Gasentladungsstrecken nur mit relativ großem Gasvolumen und mit sehr kleiner Geschwindigkeit beaufschlagt werden. Bei diesen kleinen Gasgeschwindigkeiten sind die Wärmeübergangszahlen praktisch gleich 0 ist, so daß über das strömende Gas keine Wärme abgeführt werden kann. Im Gegensatz zu Plattenozonerzeugern bereitet es bei Rohrozonerzeugern zudem große Schwierigkeiten, eine exakte Abstandshaltung der Elektroden zu gewährleisten. Dies wird vor allem durch Maßabweichungen der Rohrdurchmesser und durch Biegungen verursacht. So ist es selbst bei Verwendung von Zentrierelementen nich möglich, den Rohrabstand über die gesamte Länge konstant zu halten. Wegen der Steifigkeit der Rohre, die Durchmesser von 30 mm und mehr besitzen, ist auch eine elastische Verformung durch die Zentrierelemente nicht möglich. Als Folge dieser Ungenauigkeiten treten stark unterschiedliche Entladungsdichten auf, was zu erheblichen Verminderungen der Ozonausbeute führt.

Der Erfindung liegt die Aufgabe zugrunde, bei Rohrozonerzeugern durch konstruktive Verbesserungen die Entladungsdichten und die Gasströmung so zu verbessern, daß die erforderliche spezifische Energie zur Herstellung von Ozon verringert wird.

Diese Aufgabe ist erfindungsgemäß gelöst mit den im Anspruch 1 angegebenen Merkmalen.

Eine vorteilhafte Weiterbildung der Erfindung ist im Anspruch 2 angegeben.

Durch die kleinen Durchmesser von Innen- und Außenelektrode wird eine kleinere Kapazität als bisher bei Ozonerzeugern üblich erreicht, wodurch der Strombedarf verringert wird. Außerdem wird die Gasgeschwindigkeit erhöht, wodurch die Kühlung verbessert wird. Da gemäß der Erfindung die Innenelektrode aus mehreren gegebenenfalls verdrallten Stäben ausgebildet ist, kann der Durchmesser der Außenelektrode im Vergleich zu bekannten Konstruktionen erheblich verringert werden, der Innendurchmesser der Außenelektrode beträgt beispielsweise nur 5 bis 10 mm. Die Innenelektrode kann zum Beispiel aus Drähten mit Durchmessern von 0,5 bis 3 mm bestehen. Diese Innenelektrode kann ohne weiteres für eine maximale Feldstärke ausgelegt werden. Ein kleiner Krümmungsradius bewirkt eine größere Feldstärke. Der erfindungsgemäße Rohrozonerzeuger ermöglicht es, vorteilhafte Merkmale bekannter Konstruktionen beizubehalten. Als Dielektrika können z. B. weiterhin Materialien mit hoher Durchschlagfestigkeit wie Glas, Kunststoff, Aluminiunoxid oder Titanoxid verwendet werden. Die Außenelektrode als Gegenelektrode zur inneren Hochspannungselektrode kann von einem Metallrohr mit zusätzlichem Dielektrikum um geben werden. Sie kann auch von einem Kunststoffrohr gebildet werden, welches außen von einer elektrisch leitenden Flüssigkeit umspült wird. Der durchschlagsfeste Kunststoff ist hierbei das Dielektrikum. Die Außenelektrode kann auch aus einer auf Kunststoff aufgetragenen Metallschicht bestehen.

Zwei Ausführungsbeispiele der Erfindung sollen anhand der beigefügten Zeichnungen erläutert werden.

Es zeigen:

Fig. 1 eine Vorrichtung mit gerade verlaufendem Ozonerzeugerelement;

Fig. 2 eine Vorrichtung mit einem gewundenen Ozonerzeugerelement.

In den Figuren sind Bauteile mit gleicher Funktion mit den gleichen Positionsnummern versehen worden.

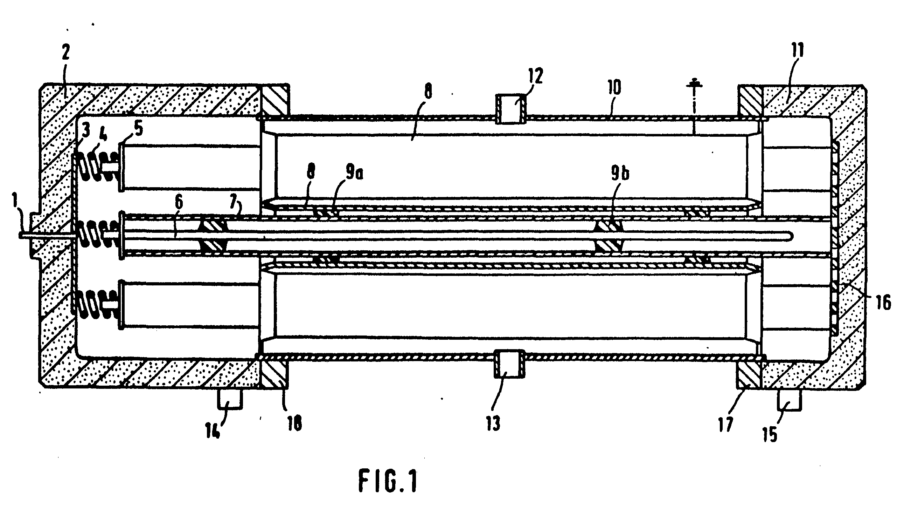

Bei der in Fig. 1 dargestellten Vorrichtung führt die Hochspannungsdurchführung 1 durch den Kopfteil 2 aus isolierendem sauerstoff- und ozonbeständigem Material über die Verteilerplatte 3, die Übertragungsfedern 4 und die Klemmfedern 5 zur Innenelektrode 6, die aus Draht besteht. Die hochspannungsführende Innenelektrode 6 ist vom Dielektrikum 7 und von der Außenelektrode 8 umgeben. Die Distanzhalter 9a und 9b gewährleisten eine exakte Abstandshaltung zwischen Innenelektrode 6, Dielektrikum 7 und Außenelektrode 8. Die Außenelektroden 8 sind an ihren Enden sechseckförmig aufgeweitet und mit ihren Kanten bündig ohne Bodenblech verschweißt. Die Vorrichtung enthält insgesamt fünf aus Innenelektrode 6, Dielektrikum 7 und Außenelektrode 8 bestehende Ozonerzeugerelemente, die vom Kühlmantelrohr 10 umgeben sind. Das Kühlmantelrohr 10 ist mittels der Verschraubungen 17 und 18 mit dem Kopfteil 2 und dem Bodenteil 11 verbunden. Kühlwasser wird durch der Stutzen 12 zu- und durch den Stutzen 13 abgeführt. Durch den Anschluß 14 wird Sauerstoff zugeführt und das erzeugte Ozon-Sauerstoffgemisch durch den Anschluß 15 abgezogen. Die das Dielektrikum 7 bildenden Rohre stützen sich auf einer mit Rillen versehenen Platte 16 im Bodenteil 11 ab.

Der Sauerstoff tritt durch den Anschluß 14 ein und verteilt sich im Kopfteil 2. Er strömt dann durch die Spalte, die von der Innenelektrode 6, dem Dielektrikum 7 und der Außenelektrode 8 gebildet werden. Die Klemmfedern 5 und die Distanzhalter 9a und 9b sind so ausgeführt, daß sie eine Passage des Sauerstoffs durch die Spalte ermöglichen. Infolge der zwischen der Innenelektrode 6 und der Außenelektrode 8 stattfindenden stillen elektrischen Entladungen wird aus einem Teil des Sauerstoffs Ozon gebildet. Das Ozon-Sauerstoff-Gemisch sammelt sich im Bodenteil 11, wobei das im Innern des Dielektrikums 7 stömende Gas durch Rillen in der Platte 16 in den Bodenteil gelangt. Die Hochspannung liegt an der Hochspannungsdurchführung 1 an, verteilt sich auf die Verteilerplatte 3 und wird von dort über die Übertragungsfedern 4 und die Klemmfedern 5, welche in Kontakt mit den Innenelektroden 6 stehen, auf insgesamt fünf Innenelektroden 6 übertragen. In bekannter Weise können beliebig viele derartige Vorrichtungen parallel geschaltet und betrieben werden.

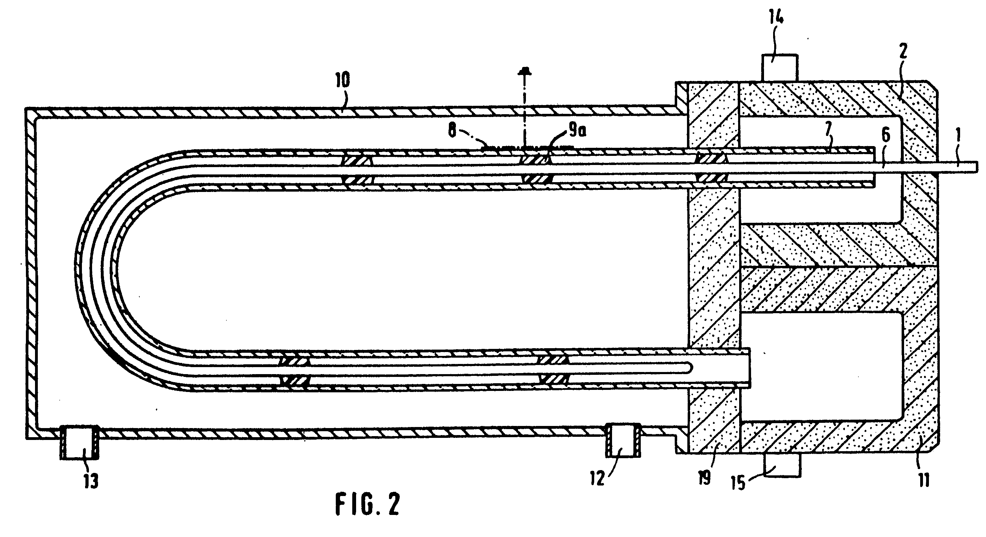

Die Vorrichtung gemäß Fig. 2 unterscheidet sich von der Vorrichtung gemäß Fig. 1 in wesentlichen dadurch, daß das Ozonerzeugerelement, bestehend aus Innenelektrode 6, Dielektrikum 7 und Außenelektrode 8, flexibel ist und gekrümmt im Kühlmedium verlegt ist. Die Außenelektrode 8 ist dabei eine auf das flexible Dielektrikum 7 aufgetragene Metallschicht. Eine genaue Abstandshaltung wird wiederum durch Distanzhalter 9a gewährleistet. Das Kopfteil 2 und das Bodenteil 11 sind auf einer gemeinsamen Grundplatte 19 befestigt. Kopfteil 2 und Bodenteil 11 können auch aus einem Stück gefertigt werden. Insbesondere bei derartigen gekrümmten Ausführungsformen ist es vorteilhaft, wenn die Innenelektrode 6 aus verdrallten Einzeldrähten in der Art eines Drahtseils besteht, weil die Flexibilität dann optimal ist.

Wie die Ausführungsbeispiele gemäß Fig. 1 und Fig. 2 zeigen, ist die erfindungsgemäße Vorrichtung in der Herstellung billig, weil komplizierte Dichtungen und Zentrierungen nicht erforderlich sind. Da die Entladungsräume an beiden Enden offen sind, ist eine intensive Gaskühlung möglich. Die Elektroden bilden enge, präzise Entladungsspalten und besitzen kleine Durchmesser. Dadurch ergeben sich hohe Gasgeschwindigkeiten und eine bessere Kühlung. Es sind keine teuren Spezialprofile erforderlich, insbesondere die Dielektrikarohre können aus handelsüblichen Rohren aus Glas, Aluminiumoxid oder Titanoxid gefertigt werden. Auch für die Elektroden können handelsübliche Rohre und Drähte verwendet werden, die von vornherein eine hohe Präzision besitzen. Mit Hilfe der Distanzhalter können so ohne Schwierigkeiten lange Ozonerzeugungselemente, z. B. von 2,5 m Länge gebildet werden. Die Gesamtabmessungen des Ozonerzeugers werden geringer. Anstelle von teuren, auf Glas aufgedampften Aluminiumverspiegelungen, kann einfacher Draht als Hochspannungselektrode verwendet werden. Selbst bei einer elektrischen Frequenz von nur 50 Hertz ist der spezifische Energieverbrauch zur Erzeugung von 1 kg Ozon niedrig. Dies zeigen die nachfolgend angegebenen Betriebsergebnisse eines erfindungsgemäßen Ozonerzeugers:

9 kWh/1 kg bei einer Konzentration von 100 g/m$^3$

8 kWh/1 kg bei einer Konzentration von 90 g/m$^3$

7 kWh/1 kg bei einer Konzentration von 70 g/m$^3$

6,7 kWh/1 kg bei einer Konzentration von 60 g/m$^3$

6,3 kWh/1 kg bei einer Konzentration von 50 g/m$^3$

6,0 kWh/1 kg bei einer Konzentration von 45 g/m$^3$

**Patentansprüche**

1. Vorrichtung zur Erzeugung von Ozon aus Sauerstoff oder Sauerstoff enthaltendem Gas durch stille elektrische Entladung in einem von dem Gas durchströmten Zwischenraum, der im wesentlichen gebildet wird aus einer rohrförmigen Außenelektrode (8) und einer von der Außenelektrode konzentrisch umgebenen spannungsführenden Innenelektrode (6), wobei in dem Zwischenraum ein Dielektrikum (7) angeordnet ist, welches die Elektroden voneinander trennt, und wobei die Innenelektrode aus mehreren massiven drahtartigen zylindrischen Metallstäben besteht, der Durchmesser der Außenelektrode entsprechend reduziert ist und das Verhältnis des Durchmessers der Außenelektrode zum Durchmesser der Innenelektrode größer als 2 ist.

2. Vorrichtung nach Anspruch 1, bei der die Innenelektrode aus mehreren verdrallten Stäben besteht.

**Revendications**

1. Dispositif pour la production d'ozone à partir d'oxygène ou d'un gaz contenant de l'oxygène, par décharge électrique silencieuse dans une chambre intermédiaire parcourue par le gaz et qui èst essentiellement délimitée par une électrode externe tubulaire (8) et une électrode interne (6) conduisant la tension et entourée de façon concentrique par l'électrode externe, un diélectrique (7) étant disposé dans cette chambre intermédiaire en séparant l'une de l'autre les électrodes, tandis que l'électrode interne est constituée par plusieurs barres métalliques cylindriques massives en forme de fils, que le diamètre de l'électrode externe est réduit en conséquence et que le rapport du diamètre de l'électrode externe au diamètre de l'électrode interne est supérieur à 2.

2. Dispositif selon la revendication 1 dans lequel l'électrode interne est constituée par plusieurs barres torsadées.

**Claims**

1. Apparatus for the generation of ozone from oxygen or gas containing oxygen by silent electric discharge in an intermediate space through which the gas flows and which is essentially formed by a tubular outer electrode (8) and a voltage-carrying inner electrode (6), which is concentrically surrounded by the outer electrode, a dielectric (7), which separates the electrodes from each other, being arranged in the intermediate space, and the inner electrode consisting of a plurality of solid wirelike cylindrical metal rods, the diameter of the outer electrode being correspondingly reduced and the ratio of the diameter of the outer electrode to the diameter of the inner electrode being greater than 2.

2. Apparatus according to Claim 1, in which the inner electrode consists of a plurality of twisted rods.

FIG.1

FIG. 2